# EUROPEAN PATENT APPLICATION

(11) **EP 4 657 830 A1**
(43) Date of publication of application: **03.12.2025**
(21) Application number: 24747159.2
(22) Date of filing: 15.01.2024
(51) Int. Cl.: H04L 67/10, G06Q 30/0601, G06Q 50/10, H04L 9/40, G06F 21/62, G06Q 10/10, G06Q 30/018, G06Q 50/18, H04L 9/32

(54) **MANAGEMENT DEVICE, MANAGEMENT METHOD, AND MANAGEMENT PROGRAM**

(30) Priority: 26.01.2023 JP 2023010563
(71) Applicant: NTT Docomo Business, Inc., Tokyo 100-8019 (JP)
(72) Inventor: SAKAINO, Akira, Tokyo 100-8019 (JP)
(74) Representative: Hoffmann Eitle
(86) International application number: PCT/JP2024/000854
(87) International publication number: WO 2024/157828

(57) **Abstract**

A connector use acceptance device (110) manages, via a first communication line, use of a connector connectable to distribute data storage. In a case where an authentication result for a line number of a business terminal of a first corporation at a time of an application for use of the connector agrees with contractor information on the first corporation, the connector use acceptance device (110) transmits a first one-time password to the business terminal of the first corporation. In a case where the connector use acceptance device (110) has received the first one-time password from the business terminal of the first corporation, the connector use acceptance device (110) acquires a first digital certificate including register information on the first corporation from a corporate digital certificate issuance infrastructure of a government and registers the first digital certificate for a connector ID of the first corporation.

## Description

### [Technical Field]

The present invention relates to a management device, a management method, and a management program.

### [Background Art]

Connectors to relay data between the cloud and the edge have been used conventionally for platform integration (for example, see Patent Literature 1).

Furthermore, in European countries, a data distribution infrastructure, which enables transmission and reception of highly confidential data while maintaining data sovereignty, has been built. This data distribution infrastructure maintains data sovereignty and ensures data transmission and reception security by: transmitting and receiving data using containerized software connectors that function as proxies for data exchange; and adopting authentication and authorization schemes. Digital certificates including timestamps indicating certifying countries and dates of certification are associated with data in this European data distribution infrastructure.

### [Citation List]

### [Non Patent Citation]

Patent Literature 1: Japanese Laid-open Patent Publication No. 2018-092565

### [Summary of Invention]

### [Technical Problem]

In Japan, to implement data distribution via the European data distribution infrastructure, a communications service provider has built connectors on behalf of users and has developed a platform where this communications service provider distributes data of each user via each user's connector. A connection destination for data storage by the user of the connector and a digital certificate, which is for the user of the connector and includes Japan's certification and a certification date, are registered for the connector.

For the connectors managed by the platform, there is a demand for prevention of alteration of public information in the digital certificate associated with data of each user, as well as simplification of a process for acquisition of this public information.

The present invention has been made in view of the above, and an object thereof is to provide a management device, a management method, and a management program that enable: prevention of alteration of public information on users; and facilitation of a process for acquisition of the public information on the users, the public information having been registered for connectors that are able to be connected to distributed data storage.

### [Solution to Problem]

In order to solve the above-described problems and achieve the object, a management device according to the present invention manages use of a connector connectable to distributed data storage via a first communication line provided by a first communications service provider, the management device including: an acceptance unit configured to accept, from a first business terminal of a first corporation, an application for use of the connector by the first corporation, via the first communication line; a first acquisition unit configured to acquire an authentication result for a line number on the first communication line of the first business terminal at a time of the application for use; a verification unit configured to compare contractor information on the first corporation for the first communication line with information related to the first corporation accepted from the first business terminal at the time of the application for use and the authentication result for the line number of the first business terminal at the time of the application for use; a first transmission control unit configured to cause an email system to transmit a first one-time password to a second business terminal under a contract with the first corporation, in a case where the contractor information on the first corporation agrees with the information related to the first corporation accepted from the first business terminal at the time of the application for use and the authentication result for the line number of the first business terminal at the time of the application for use; a second acquisition unit configured to acquire a first digital certificate including register information on the first corporation from a corporate digital certificate issuance infrastructure of a government in a case where the second acquisition unit has received the first one-time password from the first business terminal; and a registration unit configured to issue a first connector ID of the first connector to the first corporation and register the first connector ID in association with at least identification information on the first corporation and the first digital certificate.

### [Advantageous Effects of Invention]

The present invention enables prevention of alteration of public information on users and facilitation of a process for acquisition of the public information on the users, the public information having been registered for connectors that are able to be connected to distributed data storage.

### [Brief Description of Drawings]

FIG. 1 is a diagram for description of line contracts for terminal devices.
FIG. 2 is a schematic diagram illustrating an example of a configuration of a communication system in a first embodiment.
FIG. 3 is a block diagram illustrating an example of a configuration of a connector use acceptance device illustrated in FIG. 2.
FIG. 4 is a diagram for description of a flow of a process of making an application for use of a connector in the first embodiment.
FIG. 5 is a sequence diagram illustrating the flow of the process of making an application for use of a connector in the first embodiment.
FIG. 6 is a diagram for description of a flow of a process of making an application for registration of a connector in the first embodiment.
FIG. 7 is a sequence diagram illustrating the flow of the process of making an application for registration of a connector in the first embodiment.
FIG. 8 is a diagram illustrating an example of a connector registration screen.
FIG. 9 is a diagram illustrating an example of the connector registration screen.
FIG. 10 is a diagram for description of a flow of a process of registering data in the first embodiment.
FIG. 11 is a sequence diagram illustrating the flow of the process of registering data in the first embodiment.
FIG. 12 is a diagram illustrating an example of a screen on a user terminal in a related technique.
FIG. 13 is a diagram illustrating an example of the screen on the user terminal in the related technique.
FIG. 14 is a schematic diagram illustrating an example of a configuration of a communication system in a second embodiment.
FIG. 15 is a diagram for description of a flow of a communication process in the second embodiment.
FIG. 16 is a sequence diagram illustrating the flow of the communication process in the second embodiment.
FIG. 17 is a diagram illustrating an example of a screen displayed on a terminal.
FIG. 18 is a diagram illustrating an example of the screen displayed on the terminal.
FIG. 19 is a diagram illustrating an example of the screen displayed on the terminal.
FIG. 20 is a diagram illustrating an example of the screen displayed on the terminal.
FIG. 21 is a diagram illustrating an example of the screen displayed on the terminal.
FIG. 22 is a diagram illustrating an example of the screen displayed on the terminal.
FIG. 23 is a diagram illustrating a computer that executes a program.

### [Embodiments for Carrying Out the Invention]

Embodiments of a management device, a management method, and a management program, according to the present application will hereinafter be described in detail on the basis of the drawings. The management device, the management method, and the management program according to the present application are not to be limited by these embodiments.

With respect to the following embodiments, the management devices and flows of processes in the management methods in the embodiments will be described in sequence and effects of the embodiments will be described lastly.

### First Embodiment

The following description is on a first embodiment. In an example described with respect to the first embodiment, a first communications service provider builds connectors on behalf of corporations that are users, builds a platform enabling distribution of data of respective corporations via connectors of respective users, and implements data distribution via another data distribution infrastructure.

In the first embodiment, on the basis of a line authentication result for a user by the first communications service provider and contractor information that the first communications service provider has, use of a connector by the user itself is verified and the connector is set, on the platform of the first communications service provider. Therefore, alteration of public information by a person other than the user is able to be prevented.

Public information (a digital certificate) is acquired on behalf of the user and registered in attribute information on the connector, on the platform of the first communications service provider. Therefore, the user itself is not required to carry out a process of acquiring the public information and simplified and secure use of the connector is enabled.

The connectors are containerized software that enables connection to distributed data storage. Specifically, the connectors are software provided by the International Data Spaces Association (IDSA). The connectors implement control of access to distributed data storage on the basis of statutes and contracts by being implemented, for example, on edge computers, set, and registered. Security of data transmission and reception is thereby ensured.

### Line Contract

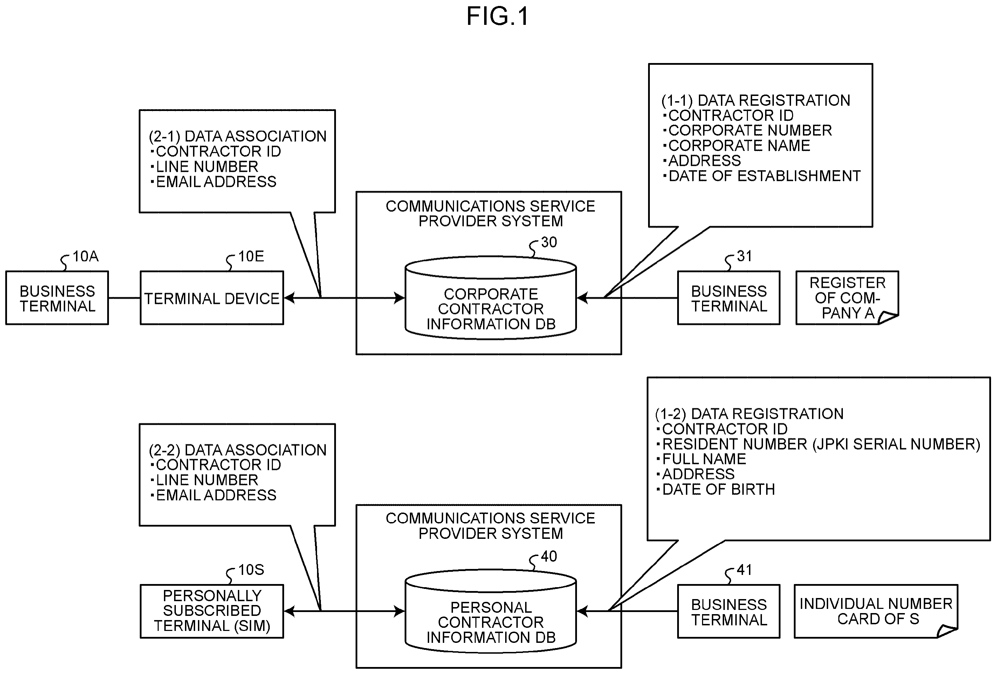

The first embodiment will be described on the premise that Company A (a first corporation), which make an application for use of a connector, has a line contract with the first communications service provider, and Employee S (a second user) belonging to Company A also has a line contract with the first communications service provider for Employee S's personal terminal device. FIG. 1 is a diagram for description of line contracts for terminal devices.

As illustrated in FIG. 1, in a case where a line contract is made for Company A's business terminal 10A (a first business terminal), a communications service provider employee registers data including Company A's register information, into a corporate contractor information database (DB) 30 via a business terminal 31 in a communications service provider system of the first communications service provider ((1-1) in FIG. 1). The register information of Company A is public information acquired through register information providing service of the Regional Legal Affairs Bureau.

The register information including the corporation number, corporate name, address, and date of establishment of Company A is registered in association with a contractor ID issued to Company A by the first communications service provider, into the corporate contractor information DB 30. The communications service provider system then associates a terminal device 10E on the subscribed line of Company A with the contractor ID of Company A, a line number set for Company A, and an email address of the business terminal 10A of Company A, for example.

In a case where Employee S makes a line contract for Employee S's own personally subscribed terminal 10S (a third terminal), a communications service provider employee registers data on Employee S's Individual Number Card in a personal contractor information DB 40 in the communications service provider system of the first communications service provider via a business terminal 41 ((1-2) in FIG. 1). Individual Number Cards are identification cards systematized by the Ministry of Internal Affairs and Communications and have resident numbers assigned to respective residents, as well as their names, addresses, dates of birth, and facial photographs, for example, recorded thereon.

Resident information including a resident number (a JPKI serial number), a full name, an address, and a date of birth of Employee S authenticated using Japanese Public Key Infrastructure (JPKI) is registered in association with a contractor ID issued to Employee S by the first communications service provider, into the personal contractor information DB 40. The communications service provider system then associates a subscriber identity module (SIM) of the personally subscribed terminal 10S of Company S with the contractor ID of Employee S, a line number set for Employee S, and an email address of the personally subscribed terminal 10S, for example.

In the communications service provider system, the contractor ID, the line number, and the register information on Company A that is a line contractor or the resident information of Employee S are thus registered. For simplification of description, the corporate contractor information DB 30 and the personal contractor information DB 40 will hereinafter be collectively referred to as a corporate and personal contractor information DB 130. The corporate and personal contractor information DB 130 stores contractor information on respective corporations and respective individuals, for a first communication line.

### Application for Use of Connector

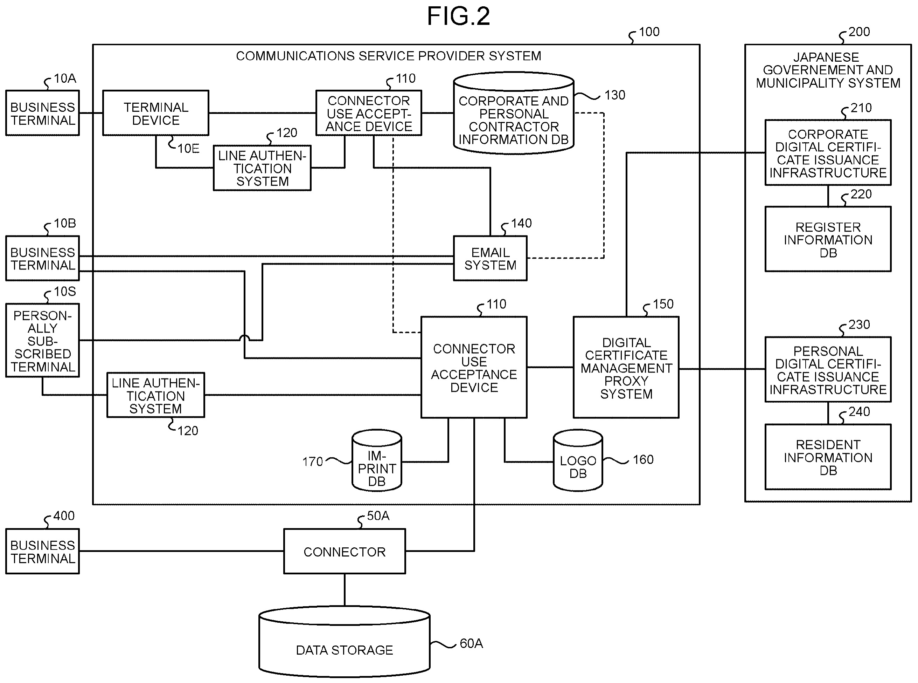

A case where a connector to be used by Company A is newly issued by the first communications service provider will be described next. A communication system in the first embodiment will be described first. FIG. 2 is a schematic diagram illustrating an example of a configuration of the communication system in the first embodiment.

As illustrated in FIG. 2, the first communications service provider builds connectors for respective corporations, and a platform system (a communications service provider system 100) that enables data integration with data storages storing data of the respective corporations is built. For FIG. 2 to FIG. 12, a process will be described as an example, the process being from building of a connector 50A of Company A by the communications service provider system 100 to accumulation of data, via the connector 50A, in a data storage 60A that stores data of Company A.

At Company A, Employee S holding the personally subscribed terminal 10S makes an application for use of a connector by using the business terminal 10A and a business terminal 10B (a second business terminal), which have been registered in the communications service provider system 100. Employee S has the personally subscribed terminal 10S, for which Employee S has personally contracted with the first communications service provider.

The communications service provider system 100 is capable of communicating with a Japanese Government and municipality system 200 having a corporate digital certificate issuance infrastructure 210, a register information DB 220, a personal digital certificate issuance infrastructure 230, and a resident information DB 240. The corporate digital certificate issuance infrastructure 210 is a transanchor that issues a digital certificate including registered information on a corporation by using the register information DB 220. The personal digital certificate issuance infrastructure 230 is a transanchor that issues a digital certificate including a resident number of an individual by using the resident information DB 240.

A business terminal 400 is a terminal installed in the communications service provider system 100 or a government or municipality and sets a library of data that are able to be provided to the connector 50A, for the connector 50A. The business terminal 400 registers, as data storage information, a connector ID of the connector 50A and a data storage location, and registers ID of a person, to which the data are allowed to be disclosed, nationality of the person, to which the data are allowed to be disclosed, a location of the person, to which the data are allowed to be disclosed, and a term, in which the data are allowed to be disclosed, into the library.

The communications service provider system 100 has a connector use acceptance device 110 (a management device) that accepts an application for use of a connector, a line authentication system 120, the corporate and personal contractor information DB 130, an email system 140, a digital certificate management proxy system 150, a logo DB 160 (database), and an imprint DB 170.

The line authentication system 120 authenticates a line of a terminal at a communication source where communication is carried out via the first communication line. The line authentication system 120 authenticates a line number of and positional information (for example, a line installation location ID or a wireless base station ID) on the terminal at the communication source.

The email system 140 implements transmission and reception of emails to and from respective terminals according to instructions from the connector use acceptance device 110, for example.

On behalf of a contractor of the first communications service provider, the digital certificate management proxy system 150 requests the Japanese Government and municipality system 200 to issue a digital certificate.

The logo DB 160 stores identification information (corporate numbers) on respective corporations in association with logo (design image) data respectively symbolizing the corporations. These logos include logos, symbols, and logotypes.

The imprint DB 170 stores identification information on a contractor of the first communications service provider in association with imprint data on the contractor of the first communications service provider.

The connector use acceptance device 110 accepts use of a connector by a contractor of the first communications service provider and manages the use of the connector. Via the first communication line provided by the first communications service provider, the connector use acceptance device 110 manages use of the connector (for example, 50A) that is connectable to distributed data storage (for example, the data storage 60A). The connector use acceptance device 110 is connected to the terminal device 10E on the subscribed line of Company A and the personally subscribed terminal 10S of Employee S and executes various processes up to setting and registration of the connector 50A of Company A, the various processes including line authentication for each terminal, issuance of a connector ID for the connector 50A of Company A, acquisition of a digital certificate, and association of the digital certificate with the connector ID, for example.

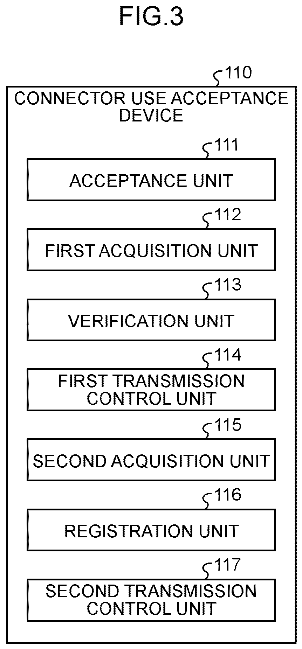

FIG. 3 is a block diagram illustrating an example of a configuration of the connector use acceptance device 110 illustrated in FIG. 2. The connector use acceptance device 110 has an acceptance unit 111, a first acquisition unit 112, a verification unit 113, a first transmission control unit 114, a second acquisition unit 115, a registration unit 116, and a second transmission control unit 117.

The acceptance unit 111 accepts an application for use of a first connector of Company A from the business terminal 10A of Company A via the first communication line provided by the first communications service provider. From the business terminal 10A of Company A, the acceptance unit 111 accepts, via the first communication line, an application for registration of the first connector, the application being made by Employee S belonging to Company A, the full name of Employee S, and a telephone number of the personally subscribed terminal 10S that Employee S personally has.

From the line authentication system 120, the first acquisition unit 112 acquires an authentication result for a line number on the first communication line of the business terminal 10A (an authentication result for a line number of Company A) at the time of the application for use of the first connector of Company A. From the line authentication system 120, the first acquisition unit 112 acquires an authentication result for a line number on the first communication line of the business terminal 10A at the time of the application for registration of the first connector by Employee S and an authentication result for a line number on the first communication line of the personally subscribed terminal 10S.

The verification unit 113 performs verification of data by transmitting a verification request to the corporate and personal contractor information DB 130 and receiving a verification request of the corporate and personal contractor information DB 130. The verification unit 113 compares contractor information on Company A in the corporate and personal contractor information DB 130 with information related to Company A accepted from the business terminal 10A at the time of the application for use of the first connector of Company A and the authentication result for the line number on the first communication line of Company A at the time of the application for use.

The verification unit 113 compares the contractor information on Company A in the corporate and personal contractor information DB 130 with the authentication result for the line number on the first communication line of the business terminal 10A at the time of the application for registration of the first connector by Employee S. Along with this, the verification unit 113 compares contractor information on Employee S in the corporate and personal contractor information DB 130 with a full name of Employee S and the telephone number of the personally subscribed terminal 10S, which were accepted at the time of the application for registration of the first connector by Employee S.

In a case where the contractor information on Company A in the corporate and personal contractor information DB 130 agrees with the information related to Company A accepted from the business terminal 10A at the time of the application for use and the authentication result for the line number on the first communication line of the business terminal 10A at the time of the application for use, the first transmission control unit 114 causes the email system 140 to transmit a first one-time password to the business terminal 10B under a contract with Company A.

In a case where the contractor information on Company A in the corporate and personal contractor information DB 130 agrees with the line number on the first communication line of the business terminal 10A at the time of the application for registration and the contractor information on Employee S in the corporate and personal contractor information DB 130 agrees with the full name of Employee S and the telephone number on the first communication line of the personally subscribed terminal 10S of Employee S, which were accepted at the time of the application for registration, the first transmission control unit 114 causes the email system 140 to transmit a second one-time password to the personally subscribed terminal 10S.

In a case where the second acquisition unit 115 has received the first one-time password from the business terminal 10A, the second acquisition unit 115 requests, via the digital certificate management proxy system 150, the corporate digital certificate issuance infrastructure 210 to issue a digital certificate (a first digital certificate) of Company A including the register information on Company A. The second acquisition unit 115 then acquires the digital certificate of Company A from the corporate digital certificate issuance infrastructure 210.

In a case where the second acquisition unit 115 has received the second one-time password from the business terminal 10A, the second acquisition unit 115 requests, via the digital certificate management proxy system 150, the personal digital certificate issuance infrastructure 230 to issue Employee S's own digital certificate (a second digital certificate), that is, an identification number (personal number) of Employee S. The second acquisition unit 115 then acquires the second user's digital certificate of Employee S from the personal digital certificate issuance infrastructure 230.

The registration unit 116 issues a first connector ID of the connector 50A to Company A, and registers the first connector ID in association with at least identification information on Company A and the first digital certificate of Company A. The registration unit 116 registers the first connector ID in association with the second digital certificate of Employee S.

In doing so, the registration unit 116 acquires logo data on Company A from the logo DB 160, and registers the first connector ID in association with the identification information on Company A, the first digital certificate of Company A, and the logo data on Company A.

In a case where the second transmission control unit 117 has received a request for disclosure of data registered by Company A from a terminal used by a third user via a connector of the third user, the second transmission control unit 117 transmits, together with the data requested to be disclosed, visualized information on the identification information on Company A, the first digital certificate of Company A, and the logo of Company A, to the terminal used by the third user and causes the terminal used by the third user to display the data and the visualized information. In doing so, the second transmission control unit 117 may also transmit impression data on Employee S who has registered the data and cause the terminal used by the third user to display the impression data.

### First Flow of Application for Use of Connector

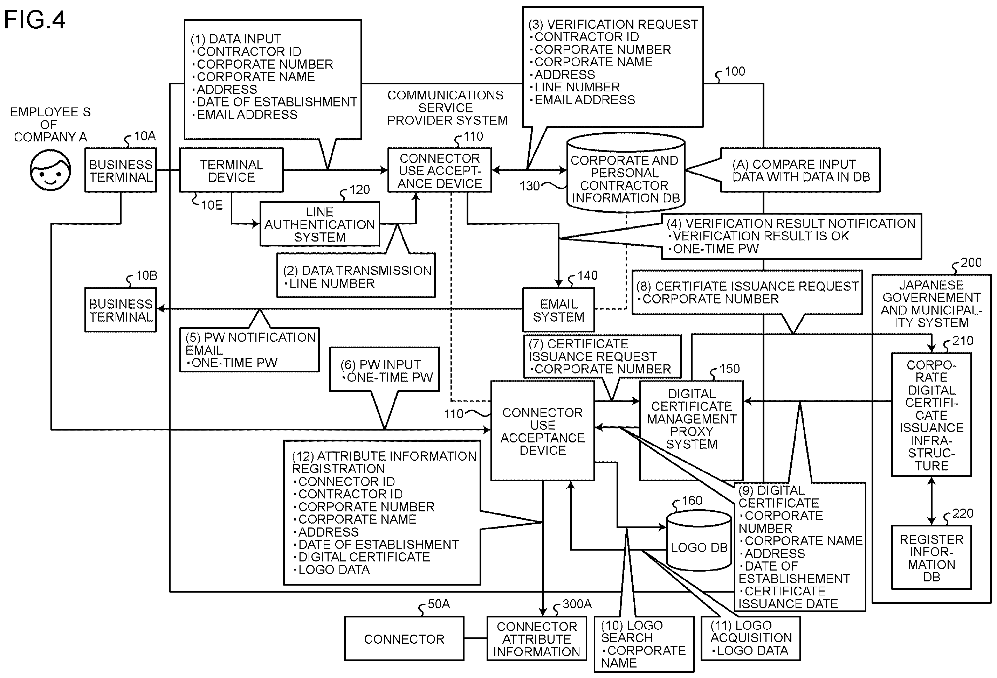

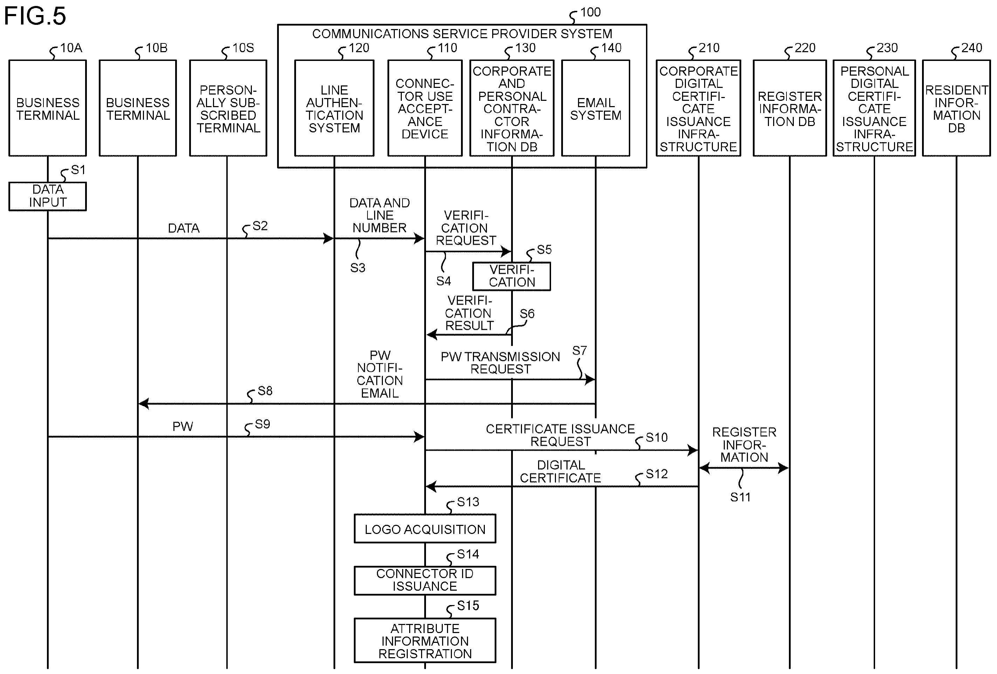

A flow of a process, in which Company A makes an application for use of a connector, will be described next. FIG. 4 is a diagram for description of a flow of a process of making an application for use of a connector in the first embodiment. FIG. 5 is a sequence diagram illustrating the flow of the process of making an application for use of a connector in the first embodiment.

Employee S of Company A operates the business terminal 10A of Company A to input data for making an application for use of the first connector of Company A ((1) in FIG. 4 and Step S1 in FIG. 5). The contractor ID, the corporate number, the corporate name, the address, the date of establishment, and the email address, of Company A, which are for the first communications service provider, are input from the business terminal 10A.

These data input are transmitted, together with an application for use of a connector, to the connector use acceptance device 110 via, for example, the terminal device 10E on the subscribed line of Company A (Step S2 in FIG. 5).

In the communications service provider system 100, the line authentication system 120 authenticates the line number on the first communication line of the business terminal 10A at the time of the application for use of the first connector of Company A. The line authentication system 120 transmits the line number at the time of the application for use of a connector to the connector use acceptance device 110 ((2) in FIG. 4 and Step S3 in FIG. 5).

The connector use acceptance device 110 requests the corporate and personal contractor information DB 130 for a data comparison between: the contractor information on Company A in the corporate and personal contractor information DB 130; and the information related to Company A accepted from the business terminal 10A at the time of the application for use of the first connector of Company A and the authentication result for the line number on the first communication line of Company A at the time of the application for use ((3) in FIG. 4 and Step S4 in FIG. 5). The connector use acceptance device 110 inputs the contractor ID, corporate number, corporate name, address, line number authenticated by the line authentication system 120, and email address, of Company A accepted from the business terminal 10A, into the corporate and personal contractor information DB 130.

The corporate and personal contractor information DB 130 makes a comparison between the data input from the connector use acceptance device 10 and the data in the corporate and personal contractor information DB 130 ((A) in FIG. 4 and Step S5 in FIG. 5) and notifies the connector use acceptance device 110 of a result of the comparison ((4) in FIG. 4 and Step S6 in FIG. 5).

In a case where the connector use acceptance device 10 has referred to the result of the comparison and the result of the comparison indicates agreement, the connector use acceptance device 10 requests the email system 140 to transmit the first one-time password (PW) to the business terminal 10B under the contract with Company A ((4) in FIG. 4 and Step S7 in FIG. 5). The email system 140 transmits a PW notification email including the first one-time PW to the business terminal 10B ((5) in FIG. 4 and Step S8 in FIG. 5). As a result, the business terminal 10B receives the PW notification email including the first one-time PW. The business terminal 10B may be a portable terminal or a personal computer (PC) terminal.

Employee S refers to the PW notification email transmitted to the business terminal 10B and inputs the first one-time PW on a registration screen of the business terminal 10A ((6) in FIG. 4 and Step S9 in FIG. 5).

In a case where the first one-time PW received from the business terminal 10A is correct, the connector use acceptance device 110 notifies the corporate digital certificate issuance infrastructure 210 of the corporate number of Company A and requests issuance of the first digital certificate of Company A, via the digital certificate management proxy system 150 ((7) and (8) in FIG. 4 and Step S10 in FIG. 5).

The corporate digital certificate issuance infrastructure 210 refers to register information in the register information DB 220 (Step S11 in FIG. 5), issues the first digital certificate of Company A, and transmits the first digital certificate issued, to the connector use acceptance device 110 ((9) in FIG. 4 and Step S12 in FIG. 5). The first digital certificate includes the corporate number, corporate name, address, date of establishment, and date of issuance of this first digital certificate, of Company A.

By using the corporate number of Company A, the connector use acceptance device 110 searches for the logo of Company A ((10) in FIG. 4) and acquires the logo data on Company A ((11) in FIG. 4 and Step S13 in FIG. 5) from the logo DB 160.

The connector use acceptance device 110 issues the first connector ID of the connector 50A to Company A (Step S14 in FIG. 5), registers attribute information 300 on Company A for the first connector ID ((12) in FIG. 4 and Step S15 in FIG. 5), and causes the connector 50A to be started up at the business terminal 10A of Company A. The first connector ID, the contractor ID of Company A for the first communications service provider, the corporate number, the corporate name, the address, the date of establishment, the first digital certificate of Company A, and logo data on Company A are registered as the attribute information on the first connector.

### Second Flow of Application for Use of Connector

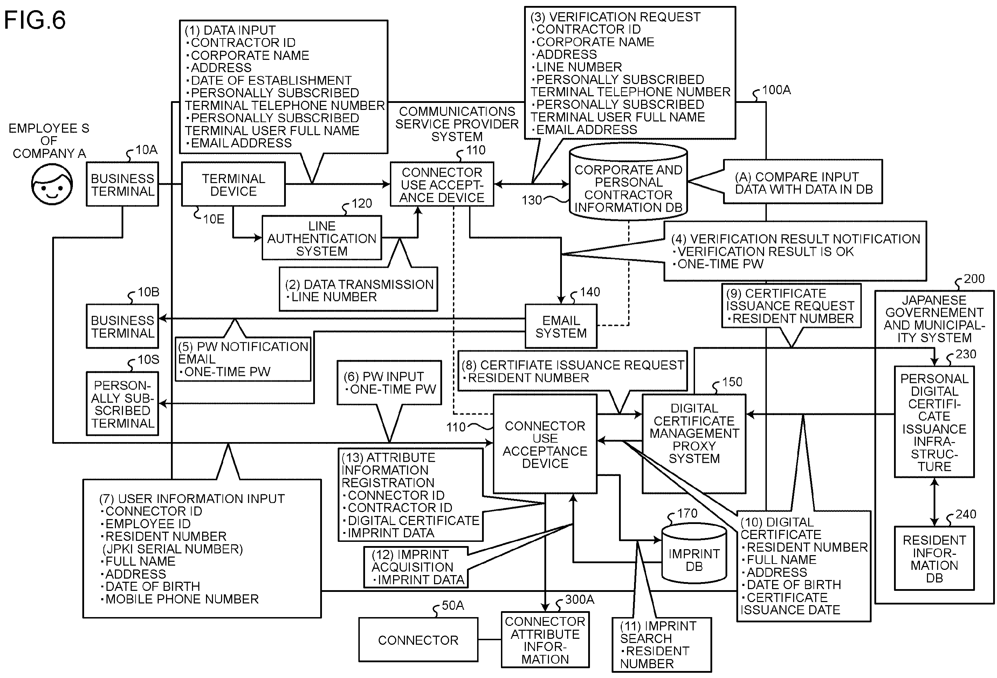

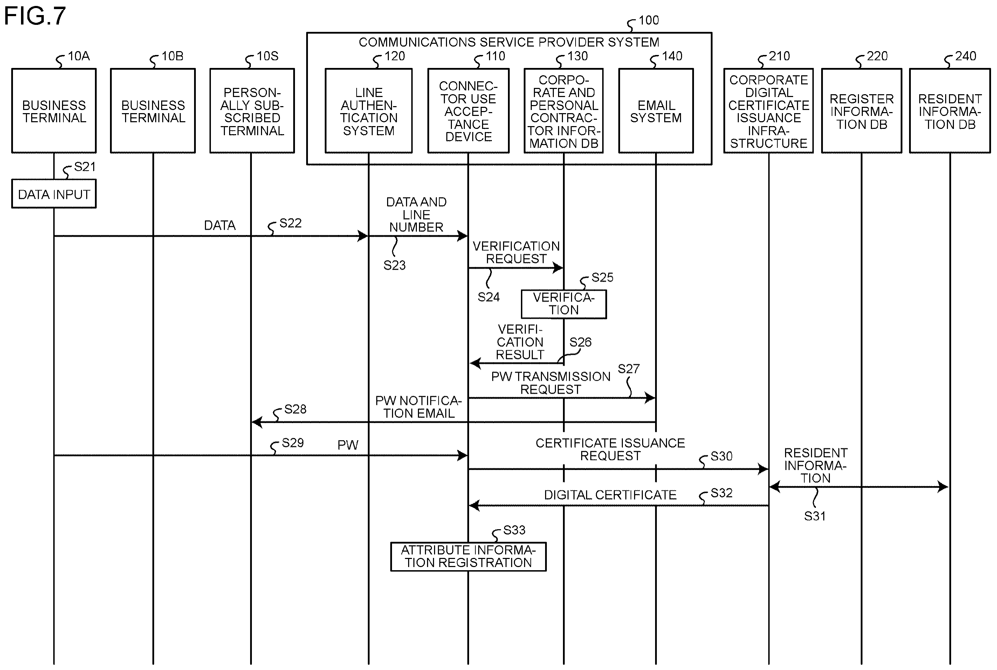

A flow of a process at the time of the application for registration of the first connector by Employee S of Company A will be described next. FIG. 6 is a diagram for description of a flow of a process of making an application for registration of a connector in the first embodiment. FIG. 7 is a sequence diagram illustrating the flow of the process of making an application for registration of a connector in the first embodiment.

Employee S of Company A operates the business terminal 10A of Company A to input data for making an application for registration of the first connector of Employee S ((1) in FIG. 6 and Step S21 in FIG. 7). From the business terminal 10A, the contractor ID of Company A for the first communications service provider, the corporate name, the address, the date of establishment, the telephone number of a personally subscribed terminal (for example, the personally subscribed terminal 10S), the full name of the user of the personally subscribed terminal (in this example, the full name of Employee S), and the email address of the personally subscribed terminal are input.

The data input are transmitted, together with an application for use of a connector, to the connector use acceptance device 110 via, for example, the terminal device 10E on the subscribed line of Company A (Step S22 in FIG. 7).

In the communications service provider system 100, the line authentication system 120 authenticates the line number on the first communication line of the business terminal 10A at the time of the application for registration of the first connector of Employee S. The line authentication system 120 transmits the line number at the time of the application for registration of a connector to the connector use acceptance device 110 ((2) in FIG. 6 and Step S23 in FIG. 7).

The connector use acceptance device 110 requests a data comparison between: the contractor information on Company A in the corporate and personal contractor information DB 130; and the authentication result for the line number on the first communication line of the business terminal 10A at the time of the application for registration of the first connector by Employee S ((3) in FIG. 6 and Step S24 in FIG. 7). Along with this, the connector use acceptance device 110 requests the corporate and personal contractor information DB 130 for a data comparison between: the contractor information on Employee S in the corporate and personal contractor information DB 130; and the full name of Employee S and the telephone number of the personally subscribed terminal 10S, which were accepted at the time of the application for registration of the first connector by Employee S ((3) in FIG. 6 and Step S24 in FIG. 7).

The connector use acceptance device 110 inputs the contractor ID, corporate name, address, and line number of Company A, the telephone number of the personally subscribed terminal (the personally subscribed terminal 10S in this example), the full name of the user of the personally subscribed terminal (the full name of Employee S in this example), and the email address of the personally subscribed terminal, which have been accepted from the business terminal 10A, into the corporate and personal contractor information DB 130.

The corporate and personal contractor information DB 130 makes a comparison between the data input from the connector use acceptance device 110 and the data in the DB ((A) in FIG. 6 and Step S25 in FIG. 7) and notifies the connector use acceptance device 110 of a result of the comparison ((4) in FIG. 6 and Step S26 in FIG. 7).

The connector use acceptance device 110 refers to the result of the comparison, and in a case where the result of the comparison indicates agreement, the connector use acceptance device 110 requests the email system 140 to transmit the second one-time PW to the personally subscribed terminal 10S under a contract with Employee S ((4) in FIG. 6 and Step S27 in FIG. 7). The email system 140 transmits a PW notification email including the second one-time PW to the personally subscribed terminal 10S ((5) in FIG. 6 and Step S28 in FIG. 7). As a result, the personally subscribed terminal 10S receives the PW notification email including the second one-time PW. The personally subscribed terminal 10S may be a portable terminal or a PC terminal. Furthermore, the email system 140 may transmit the PW notification email including the second one-time PW to the business terminal 10B.

Employee S refers to the PW notification email transmitted to the personally subscribed terminal 10S and inputs the second one-time PW on a registration screen on the business terminal 10A ((6) in FIG. 6 and Step S29 in FIG. 7). Employee S then inputs the connector ID, employee ID, resident number (JPKI serial number), full name, address, date of birth, and mobile phone number of the personally subscribed terminal 10S, on the registration screen on the business terminal 10A ((7) in FIG. 6). The data input are transmitted to the connector use acceptance device 110 via, for example, the terminal device 10E on the subscribed line of Company A.

In a case where the second one-time PW received from the business terminal 10A is correct, the connector use acceptance device 110 notifies the personal digital certificate issuance infrastructure 230 of the resident number of Employee S and requests issuance of the second digital certificate of Employee S, via the digital certificate management proxy system 150 ((8) and (9) in FIG. 6 and Step S30 in FIG. 7).

The personal digital certificate issuance infrastructure 230 refers to resident information in the resident information DB 240 (Step S31 in FIG. 7), issues the second digital certificate of Employee S, and transmits the second digital certificate issued, to the connector use acceptance device 110 ((10) in FIG. 6 and Step S32 in FIG. 7). The second digital certificate includes the resident number, full name, address, and date of birth, of Employee S, and the date of issuance of this second digital certificate.

By using the resident number of Employee S, the connector use acceptance device 110 searches for an imprint of Employee S ((11) in FIG. 6) and acquires imprint data on Employee S, from the imprint DB 170 ((12) in FIG. 6).

The connector use acceptance device 110 registers, as connector attribute information 300A, information on Employee S in association with the first connector ID ((13) in FIG. 6 and Step S33 in FIG. 7). In doing so, the information registered in association with the first connector ID is the contractor ID of Company A, the second digital certificate of Employee S, and the imprint data for Employee S.

### Example of Registration Screen

Execution of the processes from FIG. 3 to FIG. 7 in the communications service provider system 100 enables, as described hereinafter, Employee S to register the connector of Company A just by carrying out a simple process of inputting the corporate subscribed line ID, selecting a registration button, inputting the corporate number ID and the JPKI serial individual number, and inputting the telephone numbers for the corporate contract and the personal contract and the one-time PW. That is, Employee S is not required to input the corporate number, corporate name, address, date of establishment, and email address, of Corporation A and the resident number, full name, address, and date of birth, of Employee S.

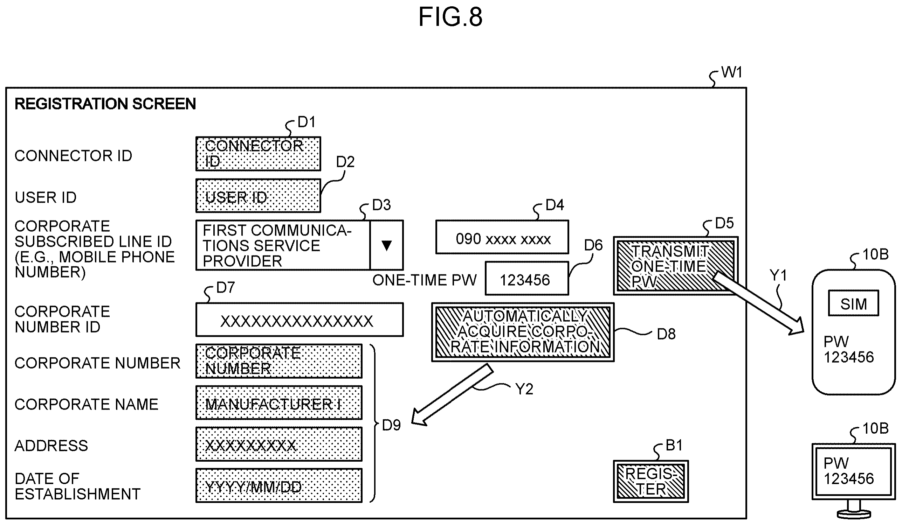

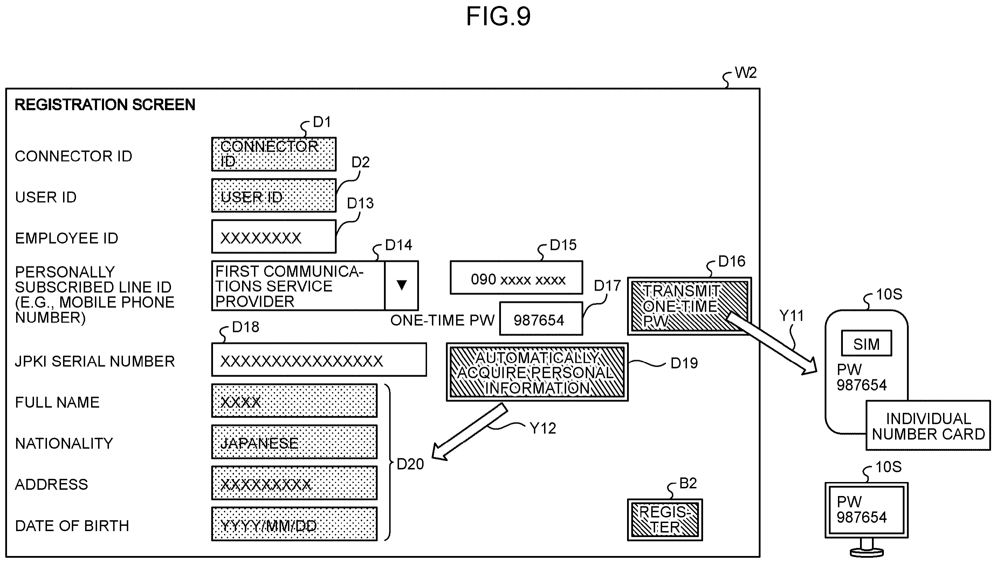

An actual flow of data input on a connector registration screen on the business terminal 10A will now be described. FIG. 8 and FIG. 9 are diagrams illustrating examples of the connector registration screen.

Firstly, in making an application for use of a connector, Employee S selects, as a cooperate subscribed line ID, the first communications service provider in a field D3 and enters a mobile phone number of a business terminal to be under contract with the first communications service provider (for example, the business terminal 10B) in a field D4, on a registration screen W1 in FIG. 8 displayed on the business terminal 10A. Employee S then selects a one-time password (PW) transmission button D5. As a result, the business terminal 10B receives a PW notification email including the first one-time PW, "123456" (an arrow Y1).

It is assumed herein that a system, in which different corporate number IDs are also respectively assigned to corporations, similarly to personal individual numbers, has been established.

Employee S inputs the first one-time PW, "123456", in a field D6 and inputs the corporate number ID of Company A in a field D7. Employee S then selects a corporate information automatic acquisition button D8. As indicated by an arrow Y2, a corporate number, a corporate name, an address, and a date of establishment, which correspond to the corporate number ID are automatically displayed respectively in fields in an area D9. This information displayed in the area D9 has been set to be not rewritable. When Employee S presses a registration button B1, a connector ID and a user ID are issued and a registration screen W2 illustrated in FIG. 9 is displayed.

As illustrated in the registration screen W2, upon application for registration of a connector by Employee S, the Employee S inputs the connector ID and user ID in fields D1 and D2 and inputs an employee ID in a field D13. Furthermore, Employee S selects, as a personally subscribed line ID, the first communications service provider in a field D14 and enters the telephone number of Employee S's own personally subscribed terminal 10S in a field D15. Employee S selects a one-time PW transmission button D16. As a result, the personally subscribed terminal 10S receives a PW notification email including the second one-time PW, "987654" (an arrow Y11).

Employee S inputs the second one-time PW, "987654", in a field D1 and inputs the JPKI serial number of Employee S in a field D18. Employee S then selects a personal information automatic acquisition button D19. As indicated by an arrow Y12, a full name, nationality, an address, and a date of birth, which correspond to the JPKI serial number are automatically displayed in respective fields in an area D20. This information displayed in the area D20 has been set to be not rewritable. When Employee S presses a registration button B2, the resident information on Employee S is registered in association with the first connector ID.

### Flow of Data Registration

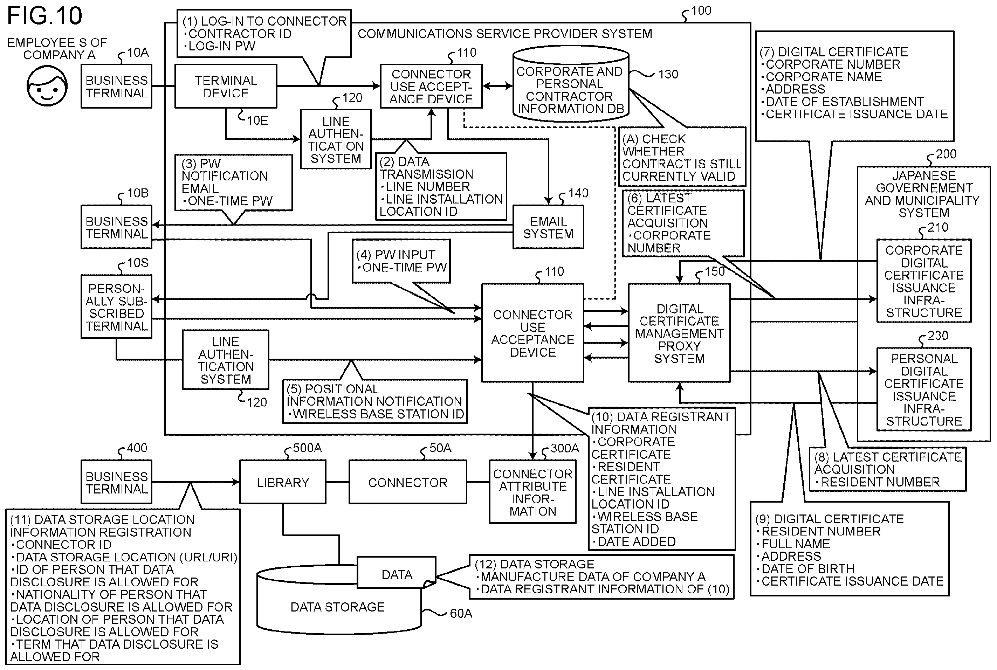

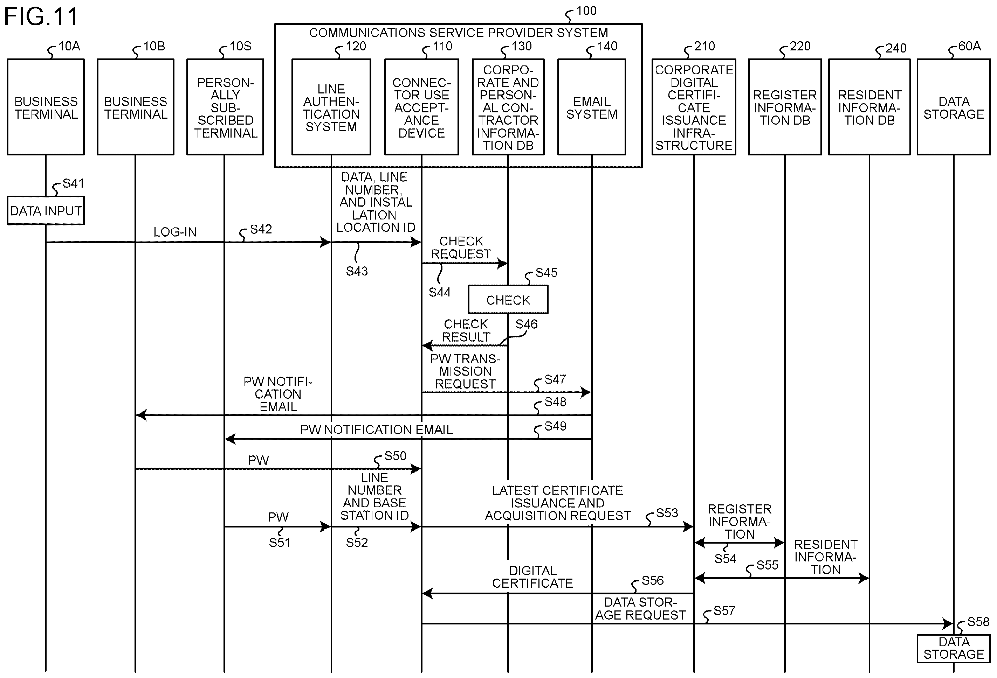

A flow of a process up to registration of data into the data storage 60A of Company A will be described next. FIG. 10 is a diagram illustrating a flow of a process of registering data in the first embodiment. FIG. 11 is a sequence diagram illustrating the flow of the process of registering data in the first embodiment. A case where Employee S of Company A registers the latest certificate and manufacture data will be described as an example.

Employee S inputs data on a log-in screen for the connector 50A from the business terminal 10A ((1) in FIG. 10 and Step S41 in FIG. 11) and makes a request for logging in the connector 50A, to the connector use acceptance device 110 (Step S42 in FIG. 11). Employee S inputs the contractor ID assigned to Company A and a log-in PW.

In the communications service provider system 100, the line authentication system 120 authenticates the line number on the first communication line of the business terminal 10A and the line installation location ID (positional information), at the time of the request for logging in the first connector of Company A. The line authentication system 120 transmits the line number and line installation location ID in the log-in request to the connector use acceptance device 110 ((2) in FIG. 10 and Step S43 in FIG. 11).

The connector use acceptance device 110 requests the corporate and personal contractor information DB 130 to check whether the contract of Company A is still currently valid, on the basis of the line number on the first communication line of the business terminal 10A (Step S44 in FIG. 11). The corporate and personal contractor information DB 130 performs a check on whether the contract of Company A is still currently valid ((A) in FIG. 10 and Step S45 in FIG. 11) and notifies the connector use acceptance device 110 of a result of the check (Step S46 in FIG. 11).

In a case where the result of the check indicates that the contract of Company A is still currently valid, the connector use acceptance device 110 requests the email system 140 to transmit a third one-time PW (Step S47 in FIG. 11).

The email system 140 transmits a PW notification email including the third one-time PW to the business terminal 10B or personally subscribed terminal 10S ((3) in FIG. 10 and Steps S48 and S49 in FIG. 11).

Employee S refers to the PW notification email transmitted to the business terminal 10B or personally subscribed terminal 10S and inputs the third one-time PW via the business terminal 10B or personally subscribed terminal 10S. The third one-time PW is thereby transmitted to the connector use acceptance device 110 from the business terminal 10B or personally subscribed terminal 10S ((4) in FIG. 10 and Steps S50 and S51 in FIG. 11).

In the communications service provider system 100, the line authentication system 120 authenticates the line number on the first communication line of the personally subscribed terminal 10S and the wireless base station ID (positional information), at the time of the transmission of the third one-time PW of the personally subscribed terminal 10S. The line authentication system 120 transmits, the wireless base station ID (positional information), together with the line number of the personally subscribed terminal 10S, to the connector use acceptance device 110 ((5) in FIG. 10 and Step S52 in FIG. 11).

In a case where the third one-time PW received from the business terminal 10B or personally subscribed terminal 10S is correct and a result of the authentication indicates that the line number of the personally subscribed terminal 10S agrees with the contractor information on Employee S in the corporate and personal contractor information DB 130, the connector use acceptance device 110 requests acquisition of the latest digital certificates of Company A and Employee S, via the digital certificate management proxy system 150 (Step S53 in FIG. 11). The connector use acceptance device 110 notifies the corporate digital certificate issuance infrastructure 210 and the personal digital certificate issuance infrastructure 230 of the corporate number of Company A and the resident number of Employee S ((6) and (8) in FIG. 10).

The corporate digital certificate issuance infrastructure 210 refers to the register information in the register information DB 220 (Step S54 in FIG. 11), acquires the first digital certificate of Company A, and transmits the first digital certificate acquired, to the connector use acceptance device 110 ((7) in FIG. 10 and Step S56 in FIG. 11). The first digital certificate includes the corporate number, corporate name, address, and date of establishment, of Company A, and the date of issuance of this first digital certificate.

Furthermore, the personal digital certificate issuance infrastructure 230 refers to the resident information in the resident information DB 240 (Step S55 in FIG. 11), acquires the second digital certificate of Employee S, and transmits the second digital certificate acquired, to the connector use acceptance device 110 ((9) in FIG. 10 and Step S56 in FIG. 11). The second digital certificate includes the resident number, full name, address, and date of birth, of Employee S, and the date of issuance of this second digital certificate.

The connector use acceptance device 110 registers, as the connector attribute information 300A, data registrant information (the latest first digital certificate (corporate certificate), the latest second digital certificate (resident certificate), the line installation location ID, the wireless base station ID, and the date added) in association with the first connector ID ((10) in FIG. 10).

For the connector 50A, the business terminal 400 sets a library 500A where data storage location information has been registered ((11) in FIG. 10). In the library, the business terminal 400 registers, as the data storage information, the connector ID of the connector 50A and the data storage location (Uniform Resource Locator (URL)/Uniform Resource Identifier (URI) information), and registers the ID of a person, to which data are allowed to be disclosed, the nationality of the person, to which the data are allowed to be disclosed, the location of the person, to which the data are allowed to be disclosed, and the term, in which the data are allowed to be disclosed.

Via the connector 50A, the connector use acceptance device 110 then stores manufacture data requested by Company A to be stored and the data registrant information ((10) in FIG. 10) into the data storage 60A ((12) in FIG. 10 and Steps S57 and S58 in FIG. 11).

### Effects of First Embodiment

In the first embodiment, the first communications service provider builds connectors on behalf of corporations that are users, builds a platform that enables distribution of data on respective corporations via the connectors of the respective users, to implement secure data distribution via another data distribution infrastructure.

In the first embodiment, in response to the application for use of a connector by the business terminal 10A of Company A, the communications service provider system 100 issues the first connector ID to Company A after confirming that the application is an application for use of a connector by Company A itself, on the basis of a line authentication result and a result of comparison with contractor information.

That is, according to the first embodiment, the communications service provider system 100 confirms that the application is the application for use of a connector by Company A itself. Therefore, Company A is not required to perform a complicated process of proving that the application is the application for use of a connector by Company A itself.

Furthermore, on behalf of Company A, the communications service provider system 100 requests issuance of the first digital certificate of Company A from the corporate digital certificate issuance infrastructure 210 of the Japanese Government and municipality system 200, and registers the digital certificate of Company A for the connector ID issued to Company A. Therefore, Company A is not required to perform a complicated process for acquiring public information.

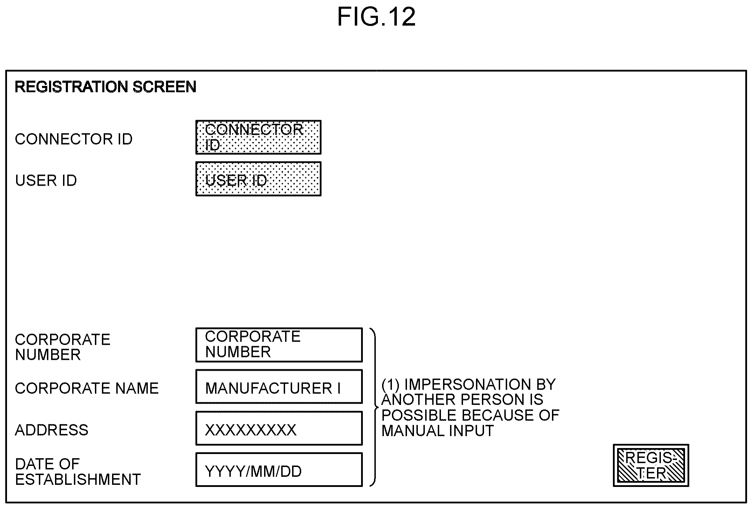

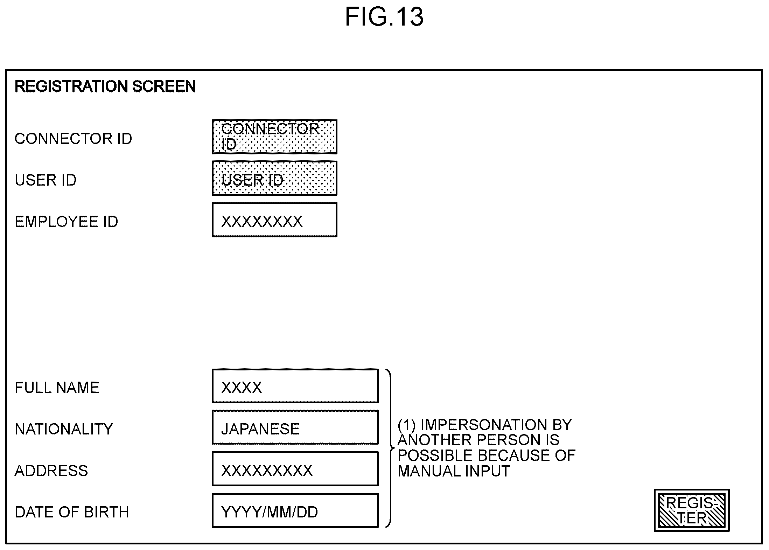

FIG. 12 and FIG. 13 are diagrams illustrating examples of a screen on a user terminal in a related technique. As illustrated in the example of the screen in FIG. 12, in a case where register information is to be manually input, impersonation by another person is possible ((1) in FIG. 12). By contrast, as illustrated in the registration screen W1 in FIG. 8, in the first embodiment, in a case where the line authentication result and contractor information for Company A agree with the contractor information in the corporate and personal contractor information DB 130, the register information on Company A is automatically displayed in response to input of the first one-time PW on the registration screen W1. Therefore, alteration of public information by a party other than Company A is able to be prevented.

Furthermore, because the communications service provider system 100 builds the connector on behalf of Company A, Company A is able to connect to a distributed DB via the first communication line that Company A has subscribed for originally. For example, via the connector 50A, Company A is able to store manufacture data in the data storage 60A that has been assigned to Company A itself.

In a case where reference to data of Company A has been requested via a connector of another user, the connector 50A transmits the data requested in a state where the data has been attached with the first digital certificate of Company A. That is, that other user is able to refer to the data in a state where the data of Company A have been proved by the Japanese Government to have been registered by Company A. Data sovereignty is thereby able to be maintained.

Furthermore, in the communications service provider system 100, a registrant (Employee S) of data registered by Company A is also confirmed to be actually Employee S on the basis of a line authentication result and a result of comparison with contractor information. The communications service provider system 100 then acquires, on behalf of Employee S, the second digital certificate of Employee S and registers the second digital certificate acquired, in association with the connector ID. Therefore, Employee S is not required to perform a complicated process for acquiring public information on Employee S.

As illustrated in the example of the screen in FIG. 13, in a case where resident information on Employee S is to be manually input, impersonation by another person is possible ((1) in FIG. 13). By contrast, as illustrated in the registration screen W2 in FIG. 9, in the first embodiment, in a case where the line authentication result and contractor information for the personally subscribed terminal 10S of Employee S agree with the contractor information in the corporate and personal contractor information DB 130, the resident information on Employee S is automatically displayed in response to input of the second one-time PW on the registration screen W2. Therefore, alteration of public information by a person other than Employee S is able to be prevented.

Furthermore, in a case where the connector 50A has received a request for reference to data of Company A, the data requested are transmitted in a state where the data are certified to have been registered by Employee S who is an employee of Company A, and data are thus able to be certified in units of individuals that are more granular than units of corporations.

As described above, in the first embodiment, data, which have been attached with digital certificates issued by the Japanese Government, and of which the registrants (corporations and individuals) and the locations of registration have been certified, are registered in data storages by the communications service provider system 100.

The first embodiment enables data sovereignty to be maintained, security of transmission and reception of data to be maintained, alteration of public information on Company A and Employee S to be prevented, and the process of acquiring the public information on Company A and Employee S to be facilitated.

Connectors have been described as an example with respect to the first embodiment, but applicable applications are not to be limited to connectors. For example, the first embodiment is applicable to a case where an application itself is distributed and an ID of a user of the application is embedded in the application itself. That is, the communications service provider system 100 registers a user ID in an application by certifying: users (a corporation and an individual) of the application and a location of the registration, on the basis of a line authentication result and a result of comparison with contractor information.

### Second Embodiment

A second embodiment will be described next. An example of data provision via a connector will be described with respect to the second embodiment.

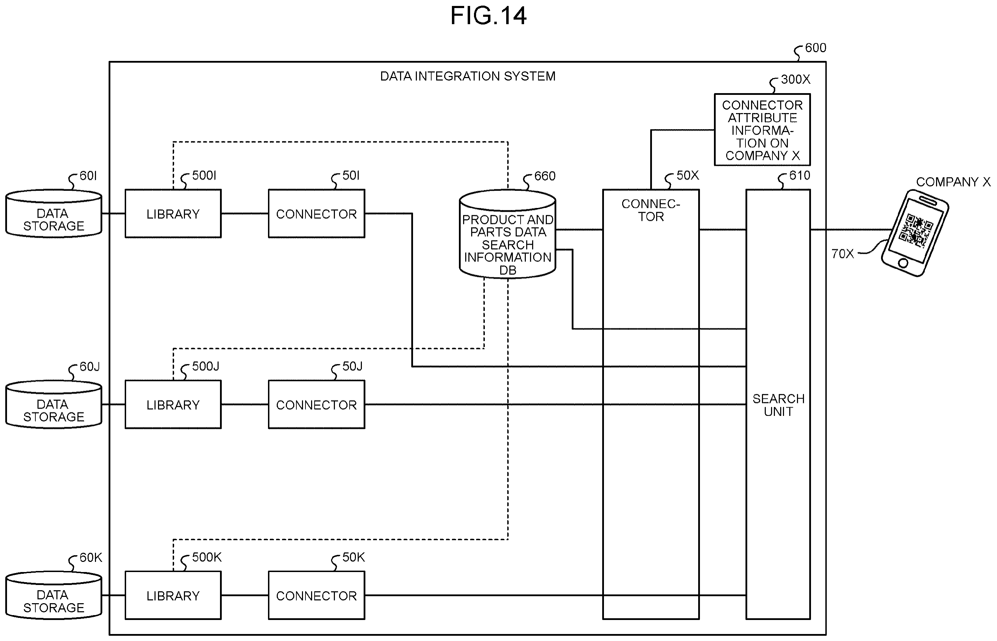

FIG. 14 is a schematic diagram illustrating an example of a configuration of a communication system in the second embodiment. As illustrated in FIG. 14, for example, a case where reference to product data has been requested from a terminal 70X of Company X will be described as an example. Company X is, for example, a recycler that dismantles automobiles and recycles batteries (accumulators) of the automobiles.

The terminal 70X requests a search for information related to a battery, parts used in the battery, and materials thereof, by communication with a data integration system 600 and displays data provided from the data integration system 600.

A data storage 60I accumulates product data registered by a battery manufacturer I. A data storage 60J accumulates product data registered by a parts manufacturer J. A data storage 60K accumulates product data registered by a material manufacturer K. The data held by the data storages 60I, 60J, and 60K have been registered using the processing method in the first embodiment and have been attached with digital certificates issued by the Japanese Government, and registrants (corporations and individuals) and locations of registration of the data have been certified by a communications service provider system 100.

The data integration system 600 has: a search unit 610 that accepts a search request and provides information to a requester; connectors of respective companies (for example, a connector 50X for Company X); attribute information on the connectors (for example, connector attribute information 300X on Company X); a product and parts data search information DB 660 that returns search key information upon receipt of a search request; a connector 50I of the battery manufacturer I; a library 500I for the connector 50I; a connector 50J of the parts manufacturer J; a library 500J for the connector 50J; a connector 50K of the material manufacturer K; and a library 500K for the connector 50K. Similarly to the communications service provider system 100 illustrated in FIG. 2, the data integration system 600 has a connector use acceptance device 110 and a line authentication system 120 for communication lines used in the data integration system 600 and performs line authentication for and acquires positional information on the terminal 70X that has requested a data search.

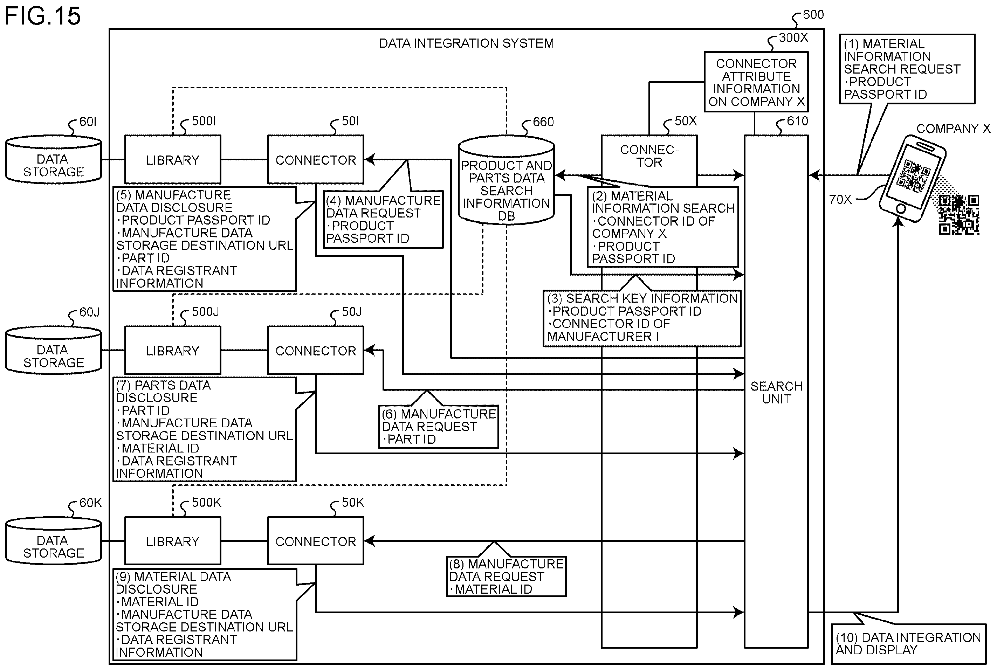

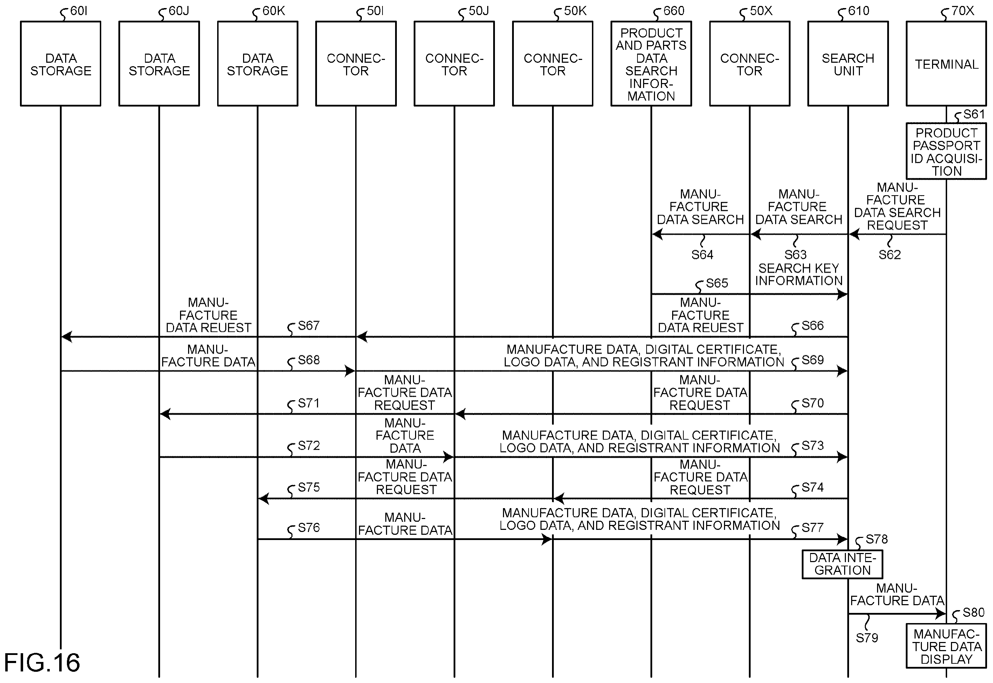

FIG. 15 is a diagram illustrating a flow of a communication process in the second embodiment. FIG. 16 is a sequence diagram illustrating the flow of the communication process in the second embodiment. With respect to FIG. 15, a case where product information on a battery of an automobile is searched from the terminal 70X of Company X will be described as an example.

The terminal 70X reads a two-dimensional code attached to the battery to acquire a product passport ID (Step S61 in FIG. 16). The terminal 70X then requests the search unit 610 to search for manufacture data including the product passport ID ((1) in FIG. 15 and Step S62 in FIG. 16).

Via the connector 50X of Company X, the search unit 610 makes a search for manufacture data by using a connector ID of Company X and the product passport ID, from information stored in the product and parts data search information DB 660 ((2) in FIG. 15 and Steps S63 and S64 in FIG. 16).

The product and parts data search information DB 660 returns search key information to the search unit 610 ((3) in FIG. 15 and Step S65 in FIG. 16). The search key information includes the product passport ID and a connector ID of the battery manufacturer I that manufactured the battery. Similar processes are executed when product data on products of the parts manufacturer J and the material manufacturer K are requested.

Via the connector 50X of Company X and the connector 50I of the manufacturer I, the search unit 610 requests the data storage 60I to disclose the manufacture data on the battery ((4) in FIG. 15 and Steps S66 and S67 in FIG. 16). In response to this, the data storage 60I discloses the manufacture data ((5) in FIG. 15 and Steps S68 and S69 in FIG. 16). The manufacture data include the product passport ID, manufacture data storage destination URL information, part IDs, and data registrant information (information illustrated at (10) in FIG. 10).

The data storage 60I acquires an ID and nationality of Company X that owns the terminal 70X, a position of the terminal 70X, and a date of a disclosure request, and in a case where the data acquired are included in IDs and nationality of parties, to which disclosure is permitted, positional information on terminals, and terms, in which data housework is allowed, which have been registered in the library 500I, the data storage 60I allows disclosure of manufacture data of the terminal 70X. Upon receipt of a disclosure request, the data storage 60J or the data storage 60K similarly determines whether or not data is allowed to be disclosed, according to information registered in the library 500J or 500K.

On the basis of the manufacture data on the battery disclosed from the data storage 60I, the search unit 610 requests disclosure of manufacture data on parts of the battery. For example, via the connector 50X of Company X and the connector 50J of the manufacturer J, the search unit 610 requests the data storage 60J to disclose manufacture data on parts of the part IDs included in the disclosed information ((6) in FIG. 15 and Steps S70 and S71 in FIG. 16). In response to this, the data storage 60J discloses the manufacture data on the parts ((7) in FIG. 15 and Steps S72 and S73 in FIG. 16). The manufacture data include the part IDs, manufacture data storage destination URL information, material IDs, and data registrant information.

On the basis of the manufacture data on the parts disclosed from the data storage 60J, the search unit 610 requests disclosure of manufacture data on materials of these parts. For example, via the connector 50X of Company X and the connector 50K of the manufacturer K, the search unit 610 requests the data storage 60K to disclose manufacture data on materials of material IDs included in the disclosed information ((8) in FIG. 15 and Steps S74 and S75 in FIG. 16). In response to this, the data storage 60K discloses the manufacture data on the materials ((9) in FIG. 15 and Steps S76 and S77 in FIG. 16). The manufacture data include the material IDs, manufacture data storage destination URL information, and data registrant information.

The search unit 610 integrates the manufacture data on the battery corresponding to the product passport ID, the manufacture data on the parts of the battery, and the manufacture data on the materials of the parts together (Step S78 in FIG. 16) and transmits the integrated manufacture data to the terminal 70X to cause the integrated manufacture data to be displayed ((10) in FIG. 15 and Steps S79 and S80 in FIG. 16).

### First Manufacture Data Display Example

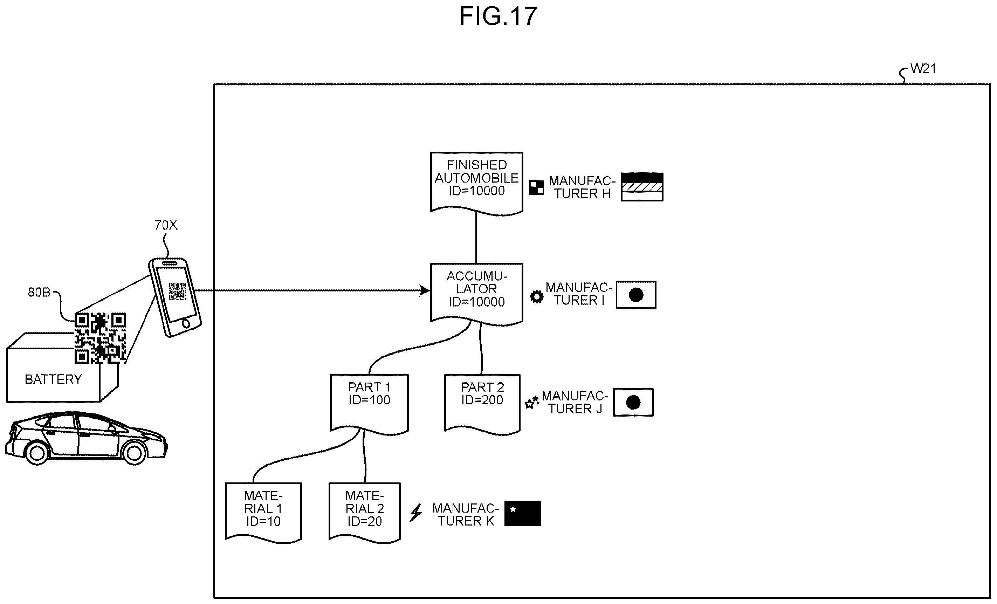

FIG. 17 to FIG. 22 are diagrams illustrating examples of a screen displayed on the terminal 70X. For example, a case where the terminal 70X has read a product code ID from a two-dimensional code 80B attached to a battery used in an automobile and requested a search for manufacture data related to this battery will be described as an example.

At the terminal 70X, for example, a screen W21 in FIG. 17 is displayed as a screen displaying manufacture data integrated by the search unit 610. On the screen W21, a tree diagram is displayed, the tree diagram having parts of the battery (for example, parts 1 and 2) and materials for the part 1 (for example, materials 1 and 2), the parts and the materials linked in this order, with the finished automobile displayed at the uppermost level, the finished automobile being equipped with the battery. Logos of manufacturers that have manufactured these products and national flags of countries that have certified these manufacturers are displayed to the upper right of the product names and IDs of the products.

Therefore, a user of the terminal 70X is able to readily recognize which manufacturers the manufacturers of the parts of the battery and the materials of the parts are, in addition to those of the automobile and the battery, by visually confirming the logos. The user of the terminal 70X is then able to recognize that the manufacturers that are the registrants of the respective product data displayed on the screen W21 have been certified by their countries.

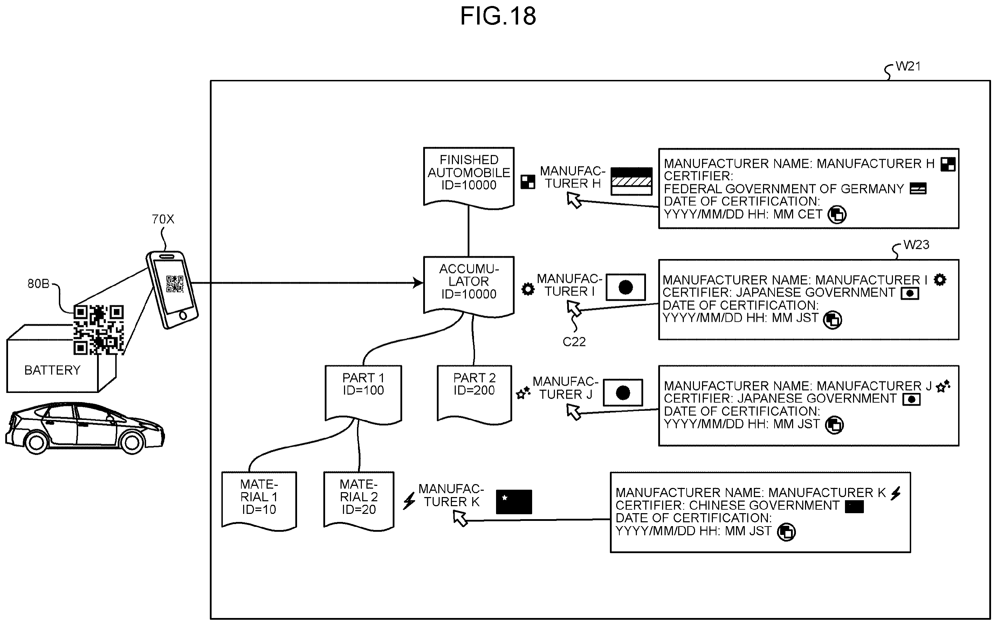

For example, when a user of the terminal 70X selects a logo of each manufacturer, as illustrated in FIG. 18, in addition to the name and logo of each manufacturer, the certifier (country) and its national flag and the date of certification and its timestamp (digital certificate) are each displayed. For example, when the logo of the battery manufacturer I of the battery (accumulator) is selected (an arrow C22) on the screen of the terminal 70X, a screen W23 is displayed, the screen W23 including the name and logo of the battery manufacturer I, the Japanese Government that is the certifier and the national flag of Japan, and the date of certification and its timestamp. Because the manufacture data have been attached with the digital certificate of Japan for the manufacturer of the product as described above, the possibility of impersonation of the registrant of the manufacture data is able to be eliminated.

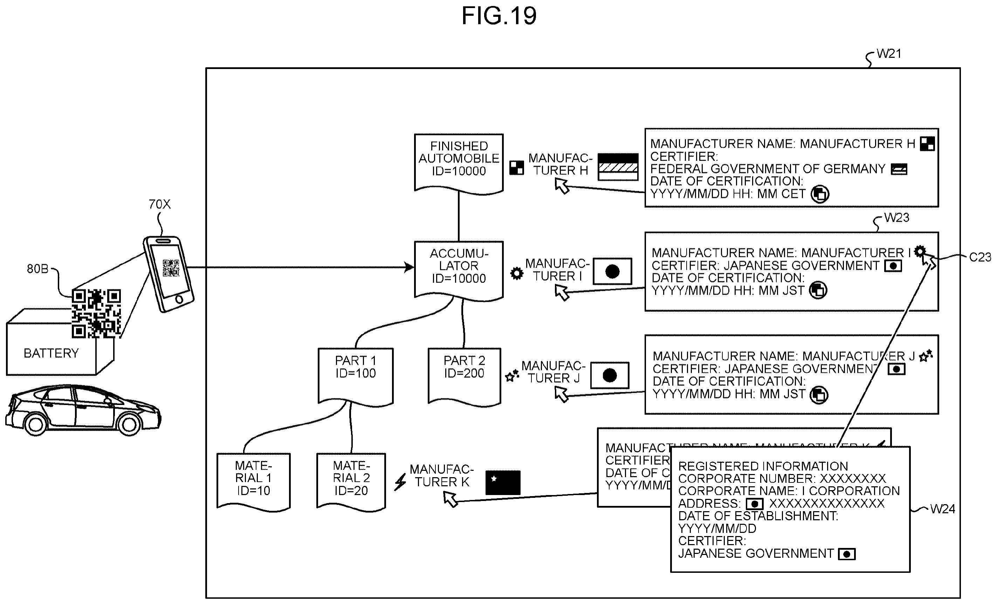

Furthermore, as illustrated in FIG. 19, when the user of the terminal 70X selects the logo of the battery manufacturer I on the screen W23, a screen W24 including registered information on this battery manufacturer I is displayed. On the screen W24, the corporate number, the corporate name, the address, the date of establishment, the certifier, which is the Japanese Government, and its national flag are displayed as the registered information on the battery manufacturer I.

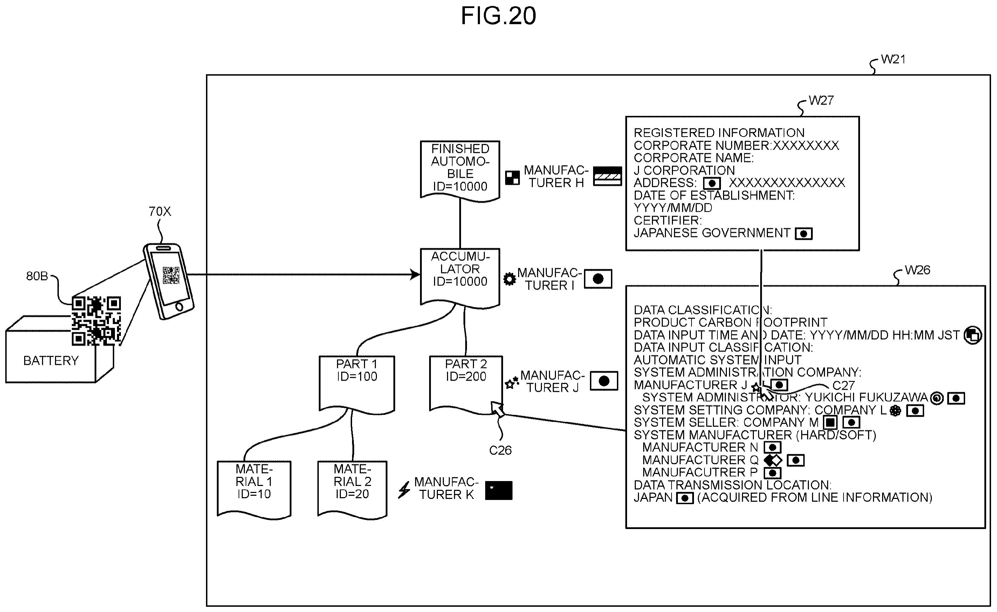

Subsequently, as illustrated in FIG. 20, when the user of the terminal 70X selects the part 2 (arrow C26), a screen W26 including the product data on this part 2 is displayed. On the screen W26, the classification of the part (data classification), the time and date of input of the data and the timestamp, the classification of the data input, the name and logo of the system administrator (the part manufacturer J), the national flag of the certifying country, the full name and imprint of the registrant and the national flag of the certifying country, the system setting company, the system seller, the name and logo of each system manufacturing company and the national flag of the certifying country, and the country of location of data transmission and its national flag are displayed. As described above, because the full name and imprint of the registrant and the national flag of the certifying country are displayed, the possibility of impersonation of the registrant of the manufacture data is able to be eliminated in units of individuals more granular than units of corporations.

These data have been stored in the data storage after comparison with a line authentication result and contractor information and determination as access to the connector by the corporation that is the registrant and an employee of the corporation by the communications service provider system 100. Therefore, the time and date of the input of the data, and the data inputters (the corporation and the employee of the corporation) have been certified by the communications service provider system 100.

Furthermore, for the manufacture data, the location of data transmission of these data has been registered through line authentication by the communications service provider system 100. In this example, because the data transmission location of the manufacture data on the part 2 is Japan, the certifying country, proper registration in Japan has been certified. That is, because information on the line used in the data transmission is clearly displayed, the user of the terminal 70X is able to accurately determine the location (country) where the data have been actually registered.

Furthermore, the logo of each corporation has been registered beforehand by the communications service provider system 100. By visually confirming this logo, the user of the terminal 70X is able to readily recognize whether the part 2 is a product of the manufacturer.

As already described with respect to the first embodiment, in a case where the communications service provider system 100 has automatically acquired and registered the corporate information and personal information, "automatic system input" is displayed as the system input classification, certifying that the corporate information and the personal information have not been altered.

In any of these screens, when a logo of a corporation is selected, a screen including registered information on this corporation is displayed. For example, on the screen W26 also, when the logo of the parts manufacturer J that is the manufacturer of the part 2 is selected (an arrow C27), a screen W27 including the registered information on this parts manufacturer J is displayed. On the screen W27, the corporate number, the corporate name, the address, the date of establishment, the certifier, which is the Japanese Government, and its national flag are displayed as the registered information on the parts manufacturer J.

### Effects of Second Embodiment

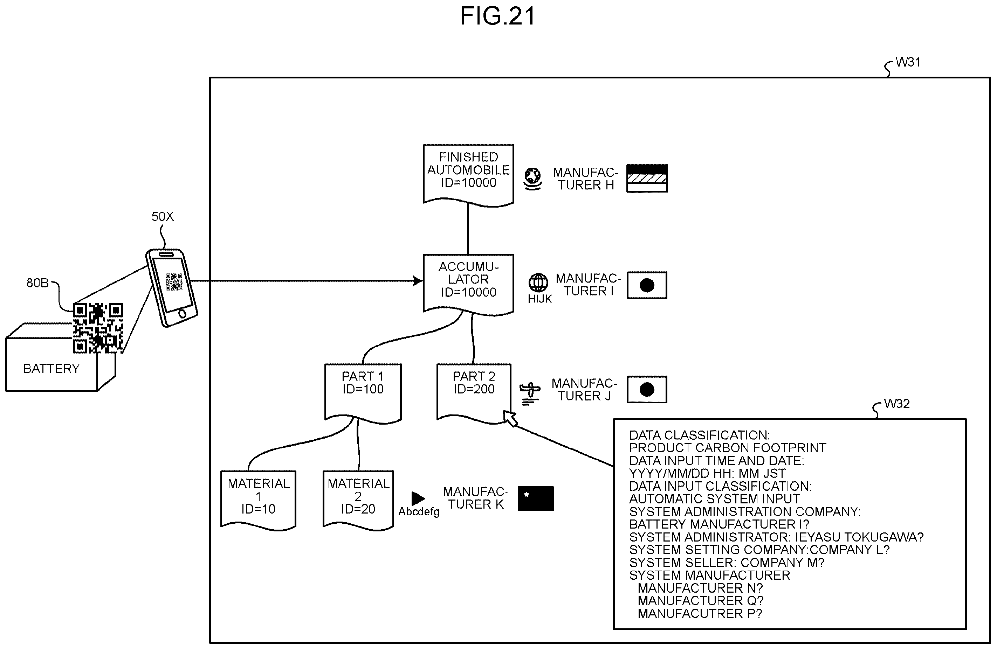

A case where a digital certificate from a country has not been attached to manufacture data will be described by reference to a screen W31 in FIG. 21. In this case, for example, as illustrated in a screen W32, for the part 2, the logo of the parts manufacturer J, the national flag of the certifying country, the logo of the corporation related, and the national flag of the certifying country are not displayed. Furthermore, the imprint of the individual registrant is not displayed either. Therefore, possibilities of impersonation of the registrant of the manufacture data and alteration of the data cannot be eliminated.

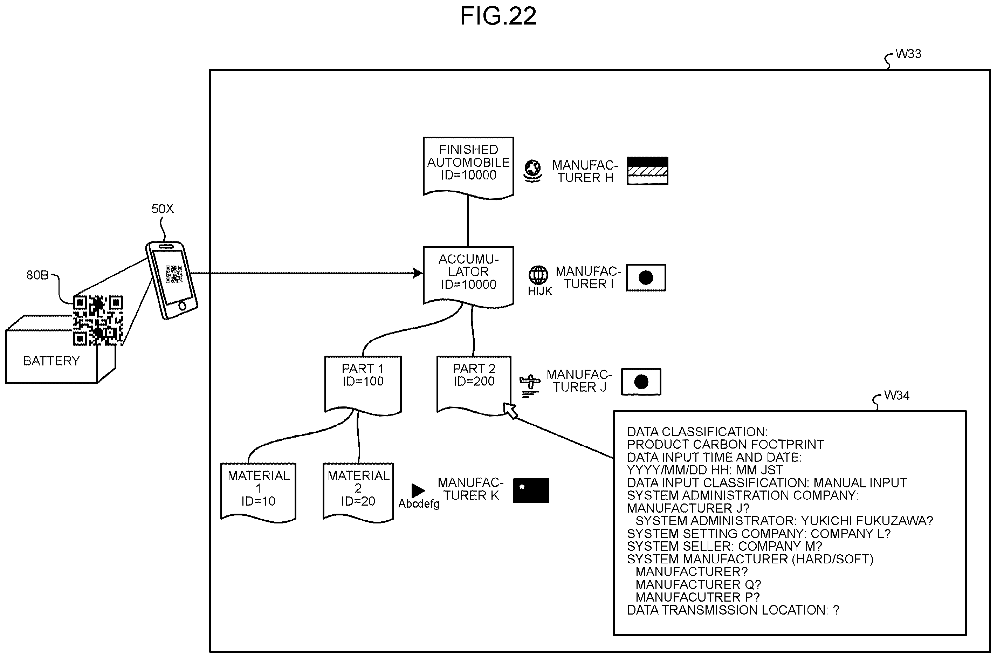

Furthermore, a case where the system input classification is "manual input" will be described by reference to a screen W33 in FIG. 22. In this case, for the part 2, as illustrated in a screen W34, the manufacturer for the manufacture data, the corporate information on each corporation related, and personal information on the registrant are not certified by the communications service provider system 100. That is, because the data on the part 2 have been input by manual input, the possibility of fabrication and alteration of data cannot be eliminated. Furthermore, because no digital certificate has been attached to the manufacture data and the location of the data transmission is also unknown, determination of the country where the data were actually registered is difficult.

In contrast, in the second embodiment, as described above, a digital certificate is attached and the communications service provider system 100 provides data to a user, the data having been certified as being free of impersonation of the data registrant and fabrication and alteration of the data. Therefore, the second embodiment enables provision of highly secure data to users. Furthermore, because identification information on the corporation that is the registrant and the digital certificate (first digital certificate) and the logo of this corporation are displayed with the data requested to be disclosed, a user is able to readily recognize the corporation that is the registrant of the data.

### System Configuration

Furthermore, each component of the respective devices has been functionally and conceptionally illustrated in the drawings and is not necessarily physically configured as illustrated in the drawings. That is, specific forms of separation and integration of each device are not limited to those illustrated in the drawings, and all or part thereof may be configured to be functionally or physically separated or integrated in any units according to various loads and use situations, for example. Furthermore, all or any part of each processing function executed in each device may be implemented by a central processing unit (CPU) or a graphics processing unit (GPU), and a program analyzed and executed by the CPU or GPU or implemented as hardware by wired logic.

Furthermore, of the respective processes described with respect the embodiments, all or part of the processes described as being performed automatically may be performed manually, or all or part of the processes described as being performed manually may be performed automatically by a publicly known method. In addition, unless otherwise specifically noted herein, any processing procedure, control procedure, specific names, and information including various data and parameters, which have been described above and illustrated in the drawings may be optionally modified.

### Program

Furthermore, programs written in a language enabling a computer to execute the processes executed by the devices in the communication system 1 described with respect to the embodiments may be generated. For example, a program written in a language enabling a computer to execute the process executed by each device in the communication system 1 described with respect to the embodiments may be generated. In this case, by the computer executing the programs, effects that are the same as those of the above described embodiments are able to be obtained.
Furthermore, by recording this program in a computer-readable recording medium and causing the computer to load and execute the program recorded in this recording medium, a process that is the same as that of the above described embodiments may be implemented.

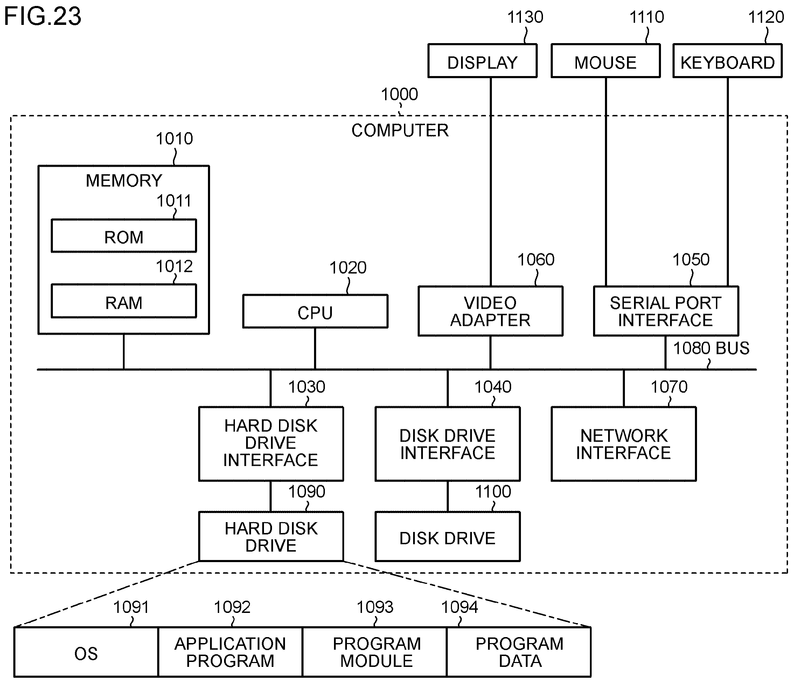

FIG. 23 is a diagram illustrating a computer that executes a program. As exemplified by FIG. 23, a computer 1000 has, for example, a memory 1010, a CPU 1020, a hard disk drive interface 1030, a disk drive interface 1040, a serial port interface 1050, a video adapter 1060, and a network interface 1070, and these respective units are connected to one another by a bus 1080.

The memory 1010 includes, as exemplified by FIG. 23, a read only memory (ROM) 1011 and a random access memory (RAM) 1012. The ROM 1011 stores, for example, a boot program, such as a basic input output system (BIOS). The hard disk drive interface 1030 is, as exemplified by FIG. 23, connected to a hard disk drive 1090. The disk drive interface 1040 is connected to a disk drive 1100. For example, an attachable and detachable storage medium, such as a magnetic disk or an optical disk, is inserted into the disk drive 1100. The serial port interface 1050 is connected to, for example, a mouse 1110 and a keyboard 1120. The video adapter 1060 is connected to, for example, a display 1130.

As exemplified by FIG. 23, the hard disk drive 1090 stores, for example, an operating system (OS) 1091, an application program 1092, a program module 1093, and program data 1094. That is, the above described program is stored as a program module, in which commands executed by the computer 1000 have been written, in the hard disk drive 1090, for example.

Furthermore, the various data described with respect to the embodiments are stored, as program data, in, for example, the memory 1010 or the hard disk drive 1090. The CPU 1020 then loads, as necessary, the program module 1093 and program data 1094 stored in the memory 1010 or hard disk drive 1090, into the RAM 1012 and executes various processing procedures.

The program module 1093 and the program data 1094 related to the program are not necessarily stored in the hard disk drive 1090, and may be, for example, stored in an attachable and detachable storage medium and read out by the CPU 1020 via a disk drive, for example. Or the program module 1093 or program data 1094 related to the program may be stored in another computer connected via a network (for example, a local area network (LAN) or a wide area network (WAN)) and read out via the network interface 1070 by the CPU 1020.

The above described embodiments and their modifications are included in the techniques disclosed by the present application and are also included in the inventions described in the claims and equivalent scope thereof.

### [Explanation of Reference]

10A, 10B, 400 BUSINESS TERMINAL
10S PERSONALLY SUBSCRIBED TERMINAL
50A, 50J, 50I, 50K, 50X CONNECTOR
60A, 60J, 60I, 60K DATA STORAGE
70X TERMINAL
100 COMMUNICATIONS SERVICE PROVIDER SYTEM
110 CONNECTOR USE ACCEPTANCE DEVICE
111 ACCEPTANCE UNIT
112 FIRST ACQUISITION UNIT
113 VERIFICATION UNIT
114 FRIST TRANSMISSION CONTROL UNIT
115 SECOND ACQUISITION UNIT
116 REGISTRATION UNIT
117 SECOND TRANSMISSION CONTROL UNIT
120 LINE AUTHENTICATION SYSTEM
130 CORPORATE AND PERSONAL CONTRACTOR INFORMATION DB
140 EMAIL SYSTEM
150 DIGITAL CERTIFACATE MANAGEMENT PROXY SYSTEM
160 LOGO DB
170 IMPRINT DB
210 CORPORATE DIGITAL CERTIFICATE ISSUANCE INFRASTRUCTURE
220 REGISTER INFORMATION DB
230 PERSONAL DIGITAL CERTIFICATE ISSUANCE INFRASTRUCTURE
240 RESIDENT INFORMATION DB
500A, 500J, 500I, 500K LIBRARY
300A, 300X CONNECTOR ATTRIBUTE INFORMATION
600 DATA INTEGRATION SYSTEM
610 SEARCH UNIT
660 PRODUCT AND PARTS DATA SEARCH INFORMATION DB

## Claims

1. A management device that manages use of a connector connectable to distributed data storage via a first communication line provided by a first communications service provider, the management device comprising:
an acceptance unit configured to accept, from a first business terminal of a first corporation, an application for use of the connector by the first corporation, via the first communication line;
a first acquisition unit configured to acquire an authentication result for a line number on the first communication line of the first business terminal at a time of the application for use;
a verification unit configured to compare contractor information on the first corporation for the first communication line with information related to the first corporation accepted from the first business terminal at the time of the application for use and the authentication result for the line number of the first business terminal at the time of the application for use;
a first transmission control unit configured to cause an email system to transmit a first one-time password to a second business terminal under a contract with the first corporation, in a case where the contractor information on the first corporation agrees with the information related to the first corporation accepted from the first business terminal at the time of the application for use and the authentication result for the line number of the first business terminal at the time of the application for use;
a second acquisition unit configured to acquire a first digital certificate including register information on the first corporation from a corporate digital certificate issuance infrastructure of a government in a case where the second acquisition unit has received the first one-time password from the first business terminal; and
a registration unit configured to issue a first connector ID of the first connector to the first corporation and register the first connector ID in association with at least identification information on the first corporation and the first digital certificate.

2. The management device according to claim 1, wherein
the acceptance unit accepts, via the first communication line, from the first business terminal, an application for registration of the first connector by a second user who is an individual belonging to the first corporation, a full name of the second user, and a telephone number of a third terminal that the second user personally has,
the first acquisition unit acquires an authentication result for a line number of the first business terminal and an authentication result for a line number of the third terminal, at a time of the application for registration,
the verification unit compares the contractor information on the first corporation with the authentication result for the line number of the first business terminal at the time of the application for registration and compares contractor information on the second user with the full name of the second user accepted at the time of the application for registration and the authentication result for the line number of the third terminal,
the first transmission control unit causes the email system to transmit a second one-time password to the third terminal in a case where the contractor information on the first corporation agrees with the authentication result for the line number of the first business terminal at the time of the application for registration and the contractor information on the second user agrees with the full name of the second user accepted at the time of the application for registration and the authentication result for the line number of the third terminal,
the second acquisition unit acquires a second digital certificate including an identification number of the second user from a personal digital certificate issuance infrastructure of the government in a case where the second acquisition unit has received the second one-time password from the first business terminal, and
the registration unit registers the first connector ID in association with the second digital certificate.

3. The management device according to claim 2, wherein the registration unit acquires, from a data base storing identification information on respective corporations and design image data respectively symbolizing the corporations in association with each other, design image data on the first corporation, and registers the first connector ID in association with the identification information on the first corporation, the first digital certificate, and the design image data on the first corporation.

4. The management device according to claim 3, including a second transmission control unit configured to transmit, in a case where the second transmission control unit has received a request for disclosure of data registered by the first corporation from a terminal used by a third user via a connector of the third user, visualized information, together with the data requested to be disclosed, to the terminal used by the third user, the visualized information being on the identification information on the first corporation, the first digital certificate, and the design image data on the first corporation.

5. A management method executed by a management device that manages use of a connector connectable to distributed data storage via a first communication line provided by a first communications service provider, the management method comprising:
an acceptance process of accepting, from a first business terminal of a first corporation, an application for use of the connector by the first corporation, via the first communication line;
a first acquisition process of acquiring an authentication result for a line number on the first communication line of the first business terminal at a time of the application for use;
a verification process of comparing contractor information on the first corporation for the first communication line with information related to the first corporation accepted from the first business terminal at the time of the application for use and the authentication result for the line number of the first business terminal at the time of the application for use;
a transmission control process of causing an email system to transmit a first one-time password to a second business terminal under a contract with the first corporation, in a case where the contractor information on the first corporation agrees with the information related to the first corporation accepted from the first business terminal at the time of the application for use and the authentication result for the line number of the first business terminal at the time of the application for use;
a second acquisition process of acquiring a first digital certificate including register information on the first corporation from a corporate digital certificate issuance infrastructure of a government in a case where the first one-time password has been received from the first business terminal; and
a registration process of issuing a first connector ID of the first connector to the first corporation and registering the first connector ID in association with at least identification information on the first corporation and the first digital certificate.

6. A management program that causes a computer to execute:
an acceptance process of accepting, via a first communication line provided by a first communications service provider, from a first business terminal of a first corporation, an application for use of a connector to be used of connectors connectable to distributed data storage by the first corporation;
a first acquisition process of acquiring an authentication result for a line number on the first communication line of the first business terminal at a time of the application for use;
a verification process of comparing contractor information on the first corporation for the first communication line with information related to the first corporation accepted from the first business terminal at the time of the application for use and the authentication result for the line number of the first business terminal at the time of the application for use;
a transmission control process of causing an email system to transmit a first one-time password to a second business terminal under a contract with the first corporation, in a case where the contractor information on the first corporation agrees with the information related to the first corporation accepted from the first business terminal at the time of the application for use and the authentication result for the line number of the first business terminal at the time of the application for use;
a second acquisition process of acquiring a first digital certificate including register information on the first corporation from a corporate digital certificate issuance infrastructure of a government in a case where the first one-time password has been received from the first business terminal; and
a registration process of issuing a first connector ID of the first connector to the first corporation and registering the first connector ID in association with at least identification information on the first corporation and the first digital certificate.
